Europäisches Patentamt

European Patent Office

Office européen des brevets

(19)

(11) EP 1 222 810 B1

(12) **EUROPÄISCHE PATENTSCHRIFT**

(45) Veröffentlichungstag und Bekanntmachung des Hinweises auf die Patenterteilung:
**18.06.2003 Patentblatt 2003/25**

(21) Anmeldenummer: **00965797.4**

(22) Anmeldetag: **31.08.2000**

(51) Int Cl.7: **H04N 1/60**

(86) Internationale Anmeldenummer:
**PCT/DE00/02959**

(87) Internationale Veröffentlichungsnummer:
**WO 01/024511 (05.04.2001 Gazette 2001/14)**

(54) **VERFAHREN ZUR DRUCKPROZESSANPASSUNG MIT ERHALTUNG DES SCHWARZAUFBAUS**

METHOD FOR ADAPTING A PRINTING PROCESS WITH MAINTENANCE OF THE BLACK STRUCTURE

PROCEDE D'ADAPTATION DE PROCESSUS D'IMPRESSION AVEC MAINTIEN DE LA STRUCTURE DU NOIR

(84) Benannte Vertragsstaaten:
**DE FR GB**

(30) Priorität: **29.09.1999 DE 19946585**

(43) Veröffentlichungstag der Anmeldung:
**17.07.2002 Patentblatt 2002/29**

(73) Patentinhaber: **Heidelberger Druckmaschinen Aktiengesellschaft
69115 Heidelberg (DE)**

(72) Erfinder:
- **KRABBENHÖFT, Uwe-Jens
  24107 Landwehr (DE)**
- **BESTMANN, Dr. Günter
  D-24161 Altenholz (DE)**

(56) Entgegenhaltungen:
**EP-A- 0 494 034        EP-A- 0 851 669
EP-A- 0 898 417**

EP 1 222 810 B1

## Beschreibung

Die Erfindung bezieht sich auf das Gebiet der elektronischen Reproduktionstechnik und betrifft ein Verfahren zur Anpassung von Farbwerten, die für einen ersten Druckprozeß erzeugt wurden, auf einen zweiten Druckprozeß, so daß der visuelle Eindruck der Farben in beiden Druckprozessen gleich ist.

In der Reproduktionstechnik werden Druckvorlagen für Druckseiten erzeugt, die alle zu druckenden Elemente wie Texte, Grafiken und Bilder enthalten. Im Fall der elektronischen Herstellung der Druckvorlagen liegen diese Elemente in Form von digitalen Daten vor. Für ein Bild werden die Daten z.B. erzeugt, indem das Bild in einem Scanner punkt- und zeilenweise abgetastet wird, jeder Bildpunkt in Farbkomponenten zerlegt wird und die Farbkomponenten digitalisiert werden. Üblicherweise werden Bilder in einem Scanner in die Farbkomponenten Rot, Grün und Blau [R,G,B] zerlegt, also in die Komponenten eines dreidimensionalen Farbraums. Für den farbigen Druck werden jedoch andere Farbkomponenten benötigt. Beim Vierfarbdruck sind das die Druckfarben Cyan, Magenta, Gelb und Schwarz [C,M,Y,K], also die Komponenten eines vierdimensionalen Farbraums. Dazu müssen die Bilddaten vom RGB-Farbraum des Scanners in den CMYK-Farbraum des zu verwendenden Druckprozesses transformiert werden.

Solche Farbraumtransformationen werden in der Reproduktionstechnik benötigt, weil alle Geräte und Prozesse ihre Einschränkungen und Besonderheiten bei der Darstellung und Wiedergabe der Farben haben, und alle Geräte und Prozesse verschiedene solche Eigenschaften haben. Deshalb gibt es für verschiedene Geräte und Prozesse wie Scanner, Monitore, Proofausgabegeräte, Druckprozesse usw. unterschiedliche Farbräume, die die Farbeigenschaften des Geräts bzw. Prozesses jeweils optimal beschreiben und die als geräteabhängige Farbräume (englisch: device dependent color space) bezeichnet werden.

Neben den geräteabhängigen Farbräumen gibt es noch geräteunabhängige Farbräume (englisch: device independent color space), die auf den menschlichen Seheigenschaften eines sogenannten Normalbeobachters basieren. Solche Farbräume sind beispielsweise der von der Standardisierungskommission CIE (Commission Internationale d'Éclairage) definierte XYZ-Farbraum oder der daraus abgeleitete LAB-Farbraum, wobei sich der LAB-Farbraum in der Technik stärker durchgesetzt hat. Will man wissen, ob zwei Farben vom menschlichen Auge als gleich oder verschieden empfunden werden, so genügt dazu die Messung der XYZ- bzw. LAB-Farbkomponenten. Die LAB-Farbkomponenten bilden einen Farbraum mit einer Helligkeitsachse [L] und zwei Farbachsen [A,B], die man sich in der Ebene eines Farbkreises vorstellen kann, durch dessen Mittelpunkt die Helligkeitsachse verläuft. Die LAB-Farbkomponenten stehen mit den XYZ-Farbkomponenten über nichtlineare Umrechnungsgleichungen miteinander in Beziehung.

Ein Gerät bzw. Prozeß kann bezüglich seiner Farbeigenschaften charakterisiert werden, indem allen möglichen Wertekombinationen des zugehörigen geräteabhängigen Farbraums die LAB-Farbkomponenten zugeordnet werden, die ein Mensch bei der mit diesen Wertekombinationen erzeugten Farben sieht. Für einen Druckprozeß erzeugen die verschiedenen CMYK-Wertekombinationen jeweils eine andere gedruckte Farbe. Mit einem Farbmeßgerät kann man die LAB-Komponenten der gedruckten Farben ermitteln und den CMYK-Wertekombinationen zuordnen. Eine solche Zuordnung, die die mit einem Gerät bzw. Prozeß erzeugten geräteabhängigen Farben zu einem geräteunabhängigen Farbraum (XYZ oder LAB) in Beziehung setzt, wird auch als Farbprofil bezeichnet, im Fall eines Druckprozesses als Ausgabe-Farbprofil. Die Definition und Datenformate für Farbprofile sind vom ICC standardisiert worden (International Color Consortium - Specification ICC. 1:1998-09). In einem ICC-Farbprofil ist die Zuordnung der Farbräume in beiden Richtungen gespeichert, z.B. die Zuordnung LAB = f1 (CMYK) und die invertierte Zuordnung CMYK = f2 (LAB). Die mit einem Farbprofil festgelegte Zuordnung kann mit Hilfe eines Tabellenspeichers (englisch: look-up table) realisiert werden. Wenn z.B. den CMYK-Farbkomponenten eines Druckprozesses die LAB-Farbkomponenten zugeordnet werden sollen, muß der Tabellenspeicher für jede mögliche Wertekombination der CMYK-Farbkomponenten einen Speicherplatz haben, in dem die zugeordneten LAB-Farbkomponenten gespeichert sind. Dieses einfache Zuordnungsverfahren hat jedoch den Nachteil, daß der Tabellenspeicher sehr groß werden kann. Wenn jede der Farbkomponenten [C,M,Y,K] mit 8 Bit digitalisiert wurde, d.h. $2^8$ = 256 Dichtestufen hat, gibt es $256^4$ = 4.294.967.296 mögliche Wertekombinationen der CMYK-Farbkomponenten. Der Tabellenspeicher muß also 4.294.967.296 Speicherzellen mit je 3 Byte Wortlänge (je ein Byte für L, A, B) haben. Damit wird der Tabellenspeicher 12,3 Gigabyte groß.

Um die Größe des Tabellenspeichers zu reduzieren, wird deshalb eine Kombination von Tabellenspeicher und Interpolationsverfahren zur Beschreibung eines Farbprofils und zur Realisierung einer entsprechenden Farbraumtransformation eingesetzt. In dem Tabellenspeicher sind nicht die Zuordnungen für alle möglichen Wertekombinationen der CMYK-Farbkomponenten gespeichert, sondern nur für ein gröberes, regelmäßiges Gitter von Stützstellen im CMYK-Farbraum. Das Gitter wird gebildet, indem in jeder Komponentenrichtung nur jeder k-te Wert als Gitterpunkt genommen wird. Für k = 16 wird also in jeder Komponente jeder sechzehnte Wert von den 256 möglichen Werten als Gitterpunkt genommen. Das Gitter hat demnach in jeder Komponentenrichtung 256/16 = 16 Gitterpunkte, d.h. für den gesamten CMYK-Farbraum 16 × 16 × 16 × 16 = 65.536 Gitterpunkte. Für jeden Gitterpunkt werden die zugeordneten Komponenten des LAB-Farbraums in dem Tabellenspeicher als Stützstellen gespeichert. Für CMYK-Wertekombinationen, die zwischen den Gitterpunkten liegen, werden die zuzuordnenden LAB-Werte aus den benachbarten Stützstellen interpoliert. Für die invertierte Zuordnung CMYK = f2 (LAB) wird im LAB-Farbraum beispielsweise ein Gitter von 16 × 16 × 16 = 4096 Gitterpunkten gebildet und im Tabellenspeicher die zugeordneten CMYK-Werte als Stützstellen gespeichert.

Der Stand der Technik und die Erfindung werden nachfolgend anhand der Figuren 1 bis 4 näher beschrieben.

Es zeigen:

Fig. 1    ein Blockdiagramm für eine Druckprozeßanpassung (Stand der Technik),

Fig. 2    ein Ablaufdiagramm für die Erzeugung einer Druckprozeßanpassung nach der Erfindung,

Fig. 3    einen nicht monotonen Helligkeitsverlauf, und

Fig. 4    ein Ablaufdiagramm für die Optimierung einer Druckprozeßanpassung nach der Erfindung.

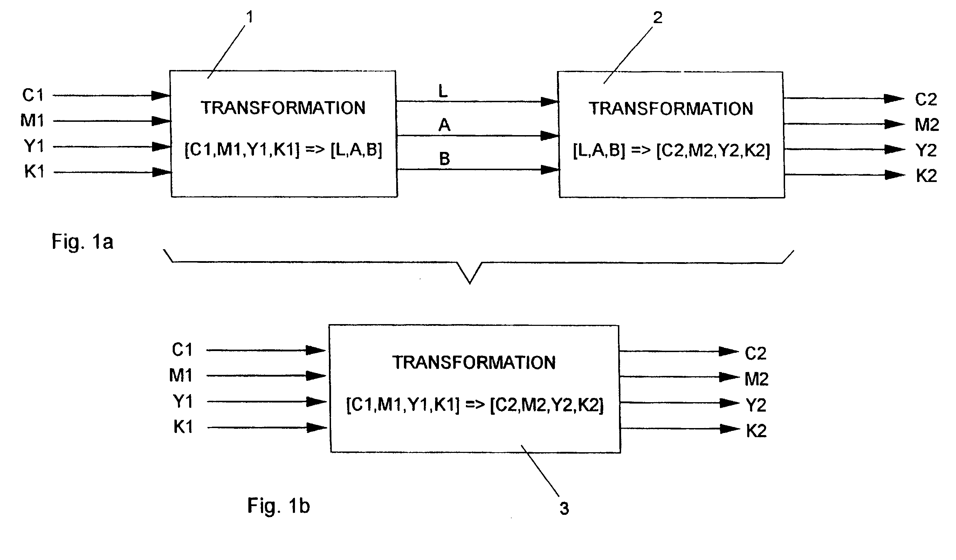

Die in den Farbprofilen gegebenen Zuordnungen zwischen geräteabhängigen Farbräumen und einem geräteunabhängigen Farbraum (z.B. LAB) können zur Farbraumtransformation zwischen den geräteabhängigen Farbräumen verwendet werden, so daß z.B. die Farbwerte [C1,M1,Y1,K1] eines ersten Druckprozesses so in die Farbwerte [C2,M2,Y2,K2] eines zweiten Druckprozesses umgerechnet werden, daß der zweite Druck nach dem visuellen Eindruck die gleichen Farben hat wie der erste Druck. Fig. 1a und Fig. 1b zeigen eine Farbraumtransformation für eine solche Druckprozeßanpassung nach dem Stand der Technik in einem Blockdiagramm. In Fig. 1a werden eine erste Farbraumtransformation (1) von den Farbwerten [C1,M1,Y1,K1] des ersten Druckprozesses in LAB-Farbwerte und eine zweite Farbraumtransformation (2) von den LAB-Farbwerten in die Farbwerte [C2,M2,Y2,K2] des zweiten Druckprozesses nacheinander ausgeführt. Die beiden Farbraumtransformationen (1) und (2) können auch zu einer äquivalenten Farbraumtransformation (3) kombiniert werden, die direkt die Farbwerte [C1,M1,Y1,K1] und die Farbwerte [C2,M2,Y2,K2] einander zuordnet (Fig. 1b). Da über den geräteunabhängigen LAB-Zwischenfarbraum jeweils die Farbwerte [C1,M1,Y1,K1] und [C2,M2,Y2,K2] einander zugeordnet werden, die die gleichen LAB-Farbwerte ergeben, werden die zugeordneten Druckfarben in den beiden Druckprozessen innerhalb des Druck-Farbumfangs als visuell gleich empfunden. Ein Nachteil dieses Verfahrens ist jedoch, daß der sogenannte Schwarzaufbau des ersten Druckprozesses verloren geht. Unter Schwarzaufbau versteht man die Zusammensetzung von gedruckten Farben bezüglich ihres Anteils an der schwarzen Druckfarbe K. Insbesondere wird angestrebt, daß rein schwarze Farben, wie z.B. Textblöcke, nur mit der Druckfarbe K aufgebaut sind, d.h. keine CMY-Anteile enthalten. Mit dem beschriebenen Verfahren nach dem Stand der Technik kann nicht erreicht werden, daß rein schwarze Farben, die im ersten Druckprozeß nur mit der Druckfarbe K aufgebaut sind, auch im zweiten Druckprozeß nur mit der Druckfarbe K aufgebaut sind. Im allgemeinen werden auf der Basis der visuellen Gleichheit, d.h. gleicher LAB-Farbwerte, im zweiten Druckprozeß Mischfarben zugeordnet, die zwar überwiegend Anteile der Druckfarbe K enthalten, aber auch CMY-Anteile. Dies führt unter anderem dazu, daß schwarze Texte und Striche nach der Druckprozeßanpassung bei Registerfehlern in der Druckmaschine farbige Ränder bekommen.

Bei dem Verfahren nach dem Stand der Technik ist außerdem nicht sichergestellt, daß der Helligkeitsverlauf in schwarzen bzw. grauen Farben, wie er im ersten Druckprozeß eingestellt ist, nach der Anpassung im zweiten Druckprozeß richtig wiedergegeben wird. Der Grund dafür ist, daß die zugeordneten schwarzen bzw. grauen Farben des zweiten Druckprozesses zusätzliche CMY-Anteile enthalten und daß der K-Anteil nach dem Helligkeitsverlauf des zweiten Druckprozesses gebildet ist, der bei der Erstellung des Farbprofils des zweiten Druckprozesses eingestellt war.

Ein weiterer Nachteil des beschriebenen Verfahrens ist, daß der Schwarzaufbau des ersten Druckprozesses in den bunten Farben verloren geht. Da man im vierfarbigen Drucksystem die gleiche Farbe mit vielen verschiedenen CMYK-Wertekombinationen drucken kann, ist das System mehrdeutig, und man kann wählen, ob graue Farben und dunkle Farben mit einem höheren Anteil der schwarzen Druckfarbe K und entsprechend geringeren Anteilen der farbigen Druckfarben [C,M,Y] oder mit einem geringeren Anteil K und entsprechend höheren Anteilen [C,M,Y] gedruckt werden sollen. Diese Entscheidung wird mit bekannten Verfahren wie beispielsweise Under-Color-Removal (UCR) oder Gray-Component-Reduction (GCR) getroffen. Die Entscheidung, die für die Farbwerte [C1,M1,Y1,K1] des ersten Druckprozesses getroffen wurde, wird nach dem beschriebenen herkömmlichen Verfahren der Druckprozeßanpassung nicht in die zugeordneten Farbwerte [C2,M2,Y2,K2] des zweiten Druckprozesses übernommen. Vielmehr sind die zugeordneten Farbwerte [C2,M2,Y2,K2] nach dem Schwarzaufbau des zweiten Druckprozesses gebildet, der bei der Erstellung des Farbprofils des zweiten Druckprozesses eingestellt war.

Dokument EP-A-0 898 417 beschreibt die Umwandlung von ersten Druckfarbwerten in einen zweiten Satz über einen geräteunabhängigen Farbraum (Lab). Es wird ebenfalls die Problematik der Transformation von schwarzer Schrift angesprochen. In diesem Dokument wird eine allgemeine Transformation benutzt und für den Fall CMY=0 eine Ausnahmebehandlung definiert, die nur Schwarzwerte in die Schwarzwerte des Zielfarbsystems umsetzt. Schwarzwerte die mit kleinen CMY Werten gemischt sind, bereiten hier jedoch wieder Probleme.

Dokument EP-A-0 851 669 beschreibt eine Farbtransformaton von CMYK Werten eines ersten Farbsystems in CMYK Werte eines zweiten Farbsystems über einen geräteunabhängigen Farbraum (XYZ, Lab). Um die Transformationsmatrix zu erhalten, wird ein neutraler Wert gebildet (alle CMY Kombinationen die in einem Grauwert mit a,b=0 resultieren). Zwischen allen neutralen Werten des ersten und zweiten Farbsystems wird dann eine Transformationsmatrix erstellt, die dann auf alle CMYK Werte ausgedehnt wird.

Es ist daher die Aufgabe der vorliegenden Erfindung, die zuvor genannten Einschränkungen und Nachteile zu vermeiden und ein Verfahren zur Druckprozeßanpassung von einem ersten Druckprozeß mit den Farbwerten [C1,M1,Y1,K1] zu einem zweiten Druckprozeß mit den Farbwerten [C2,M2,Y2,K2] anzugeben, das auf der Basis gegebener Farbprofile für die beiden Druckprozesse arbeitet, und wobei sowohl die visuell empfundenen Farben als auch der Schwarzaufbau des ersten Druckprozesses erhalten bleiben. Diese Aufgabe wird durch die Merkmale des Anspruchs 1 gelöst. Vorteilhafte Weiterbildungen sind in den Unteransprüchen angegeben.

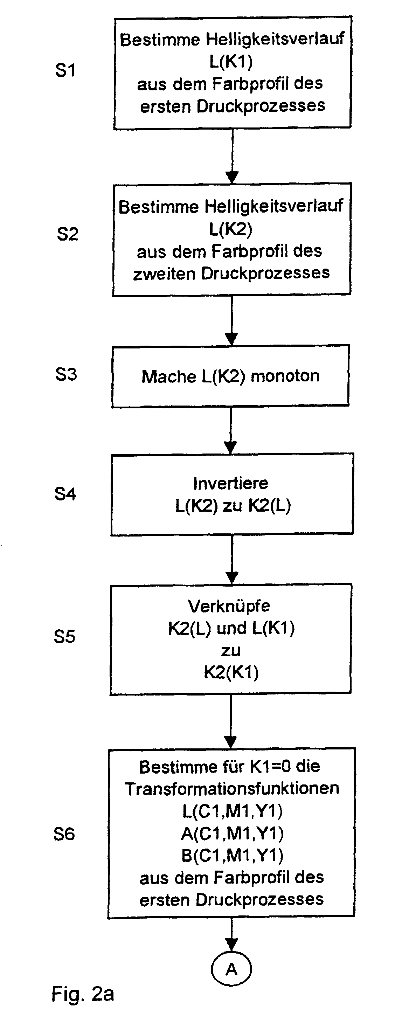

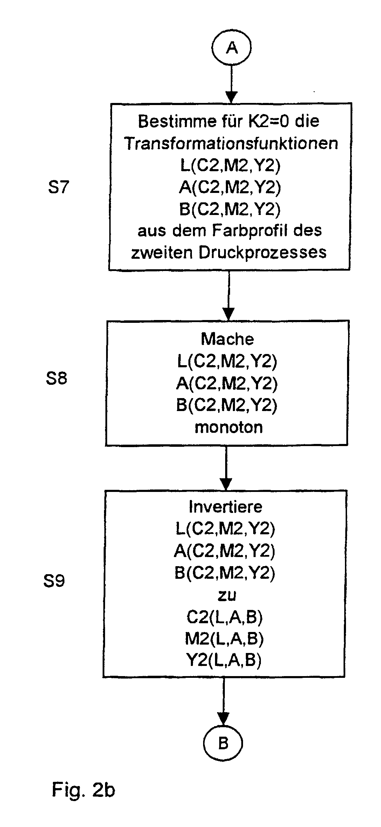

Fig. 2a bis Fig. 2c zeigen die einzelnen Schritte des erfindungsgemäßen Verfahrens als Ablaufdiagramm. Im Schritt S1 wird zunächst aus dem Farbprofil des ersten Druckprozesses der Helligkeitsverlauf in Abhängigkeit vom Farbwert K1 bestimmt, d.h. die Funktion L(K1). Wie zuvor erläutert gibt das Farbprofil einen Zusammenhang zwischen den LAB-Farbwerten und den Farbwerten [C1,M1,Y1,K1] an. Den gesuchten Helligkeitsverlauf gewinnt man daraus, indem man C1=0, M1=0 und Y1=0 setzt und den Wert K1 variiert. Wenn die Farbwerte [C1,M1,Y1,K1] zum Beispiel mit jeweils 8 bit gespeichert sind, wird K1 = 0.....255 variiert. Die daraus resultierenden L-Werte ergeben den Helligkeitsverlauf L(K1).

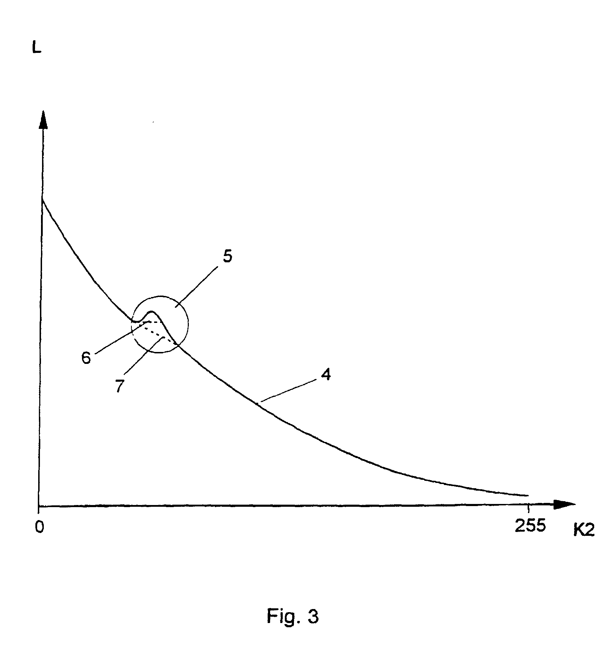

Im Schritt S2 wird in gleicher Weise aus dem Farbprofil des zweiten Druckprozesses der Helligkeitsverlauf L(K2) ermittelt. Die Funktion L(K2) hat im allgemeinen einen monotonen Verlauf. Falls sie bedingt durch Rechenungenauigkeiten oder andere Einflüsse an manchen Stellen doch nicht monoton ist, wird sie im Schritt S3 so modifiziert, daß sie einen monotonen Verlauf erhält. Fig. 3 veranschaulicht das an einem Beispiel. Die Funktion L(K2), d.h. der Helligkeitsverlauf (4), hat in dem Beispiel einen allgemeinen monoton fallenden Verlauf, bis auf den Bereich (5), in dem die Funktion ansteigt. Die Nicht-Monotonie wurde in Fig. 3 zur Verdeutlichung stark übertrieben gezeichnet. Mit einem beliebigen geeigneten Verfahren wird der Funktionsverlauf so abgeändert, daß er auch im Bereich (5) monoton wird. Beispielsweise wird mit steigenden K2-Werten der Funktionswert L solange konstant gehalten, bis wieder kleinere Funktionswerte L auftreten (6). Eine andere Möglichkeit ist, die Funktion mit einem Interpolationsverfahren zu glätten (7). Für die Erfindung ist es nicht wesentlich, nach welchem Verfahren die Monotonie der Funktion L(K2) hergestellt wird. Wichtig ist nur, daß die Funktion monoton gemacht wird, damit der folgende Verfahrensschritt S4 ausgeführt werden kann.

Im Schritt S4 wird der Helligkeitsverlauf L(K2) invertiert, so daß man die Funktion K2(L) erhält. Anschließend werden im Schritt S5 die Funktionen L(K1) und K2(L) durch "Hintereinanderschalten" verknüpft, d. h. die Funktion

$$K2[L(K1)] = K2(K1) \qquad (1)$$

gebildet. Diese Transformationsfunktion gibt für rein schwarze bzw. graue Farben an, welcher Farbwert K2 im zweiten Druckprozeß zu verwenden ist, damit der gleiche visuelle Helligkeitseindruck erzeugt wird wie mit dem Farbwert K1 im ersten Druckprozeß.

Im Schritt S6 werden aus dem Farbprofil des ersten Druckprozesses die Transformationsfunktionen

$$L(C1,M1,Y1)$$

$$A(C1,M1,Y1)$$

$$B(C1,M1,Y1) \qquad (2)$$

bestimmt. Dazu wird K1=0 gesetzt, und die Farbkomponenten C, M und Y werden in ihrem Wertebereich variiert, z.B. C = 0.....255, M = 0.....255, Y = 0.....255. Für alle möglichen Wertekombinationen von [C,M,Y] ergeben sich dann aus dem Farbprofil die zugehörigen LAB-Farbwerte, d.h. die obigen Transformationsfunktionen.

Im Schritt S7 werden in gleicher Weise aus dem Farbprofil des zweiten Druckprozesses die entsprechenden Transformationsfunktionen

$$L(C2,M2,Y2)$$

$$A(C2,M2,Y2)$$

$$B(C2,M2,Y2) \qquad (3)$$

bestimmt. Die Funktionen haben im allgemeinen einen monotonen Verlauf. Falls sie an manchen Stellen doch nicht monoton sind, werden sie im Schritt S8 so modifiziert, daß sie einen monotonen Verlauf erhalten. Dies geschieht in analoger Weise, wie es an dem Beispiel von Fig. 3 erläutert wurde. Im Unterschied zu Fig. 3 ist jedoch nicht eine Kurve zu glätten sondern Flächen über den drei unabhängigen Variablen [C2,M2,Y2]. Das Monotonisierungsverfahren muß dann entsprechend auf mehrere Dimensionen erweitert werden.

Im Schritt S9 wird dann das Funktionensystem nach den Gleichungen (3) invertiert, so daß man die Funktionen

$$C2(L,A,B)$$

$$M2(L,A,B)$$

$$Y2(L,A,B) \qquad (4)$$

erhält. Anschließend werden im Schritt S10 diese Funktionen mit den im Schritt S6 gewonnenen Transformationsfunktionen (nach den Gleichungen (2)) durch "Hintereinanderschalten" verknüpft, d.h. die Funktionen

$$C2(C1,M1,Y1)$$

$$M2(C1,M1,Y1)$$

$$Y2(C1,M1,Y1) \qquad (5)$$

gebildet. Diese Funktionen geben für reine Farben an, d.h. für Farben ohne Schwarzanteil, welche Farbwerte [C2,M2,Y2] im zweiten Druckprozeß zu verwenden sind, damit der gleiche visuelle Farb- und Helligkeitseindruck erzeugt wird wie mit den Farbwerten [C1,M1,Y1] im ersten Druckprozeß.

Im Schritt S11 werden schließlich die im Schritt S10 gewonnenen Transformationsfunktionen für reine Farben nach den Gleichungen (5) und die im Schritt S5 gewonnene Transformationsfunktion für rein schwarze bzw. graue Farben nach der Gleichung (1) zu einer vierdimensionalen Transformation

$$C2(C1,M1,Y1,K1)$$

$$M2(C1,M1,Y1,K1)$$

$$Y2(C1,M1,Y1,K1)$$

$$K2(C1,M1,Y1,K1) \qquad (8)$$

verbunden, mit der zu jeder für den ersten Druckprozeß gegebenen Kombination von Farbwerten [C1,M1,Y1, K1] eine entsprechende Kombination von Farbwerten [C2,M2,Y2,K2] für den zweiten Druckprozeß ermittelt werden kann. Diese vierdimensionale Transformation ist die gesuchte Druckprozeßanpassung.

Wenn die Druckprozeßanpassung beispielsweise in Form eines Tabellenspeichers mit 16 × 16 × 16 × 16 Stützwerten erstellt werden soll, können die Transformationsfunktionen für reine Farben (Gleichungen (5)) und die Transformationsfunktion für rein schwarze bzw. graue Farben (Gleichung (1)) in folgender Weise verbunden werden. Jedem der 16 × 16 × 16 × 16 Tabellenspeicherplätze entspricht eine Wertekombination [C1,M1,Y1,K1], die im folgenden als "Adresse" bezeichnet werden soll. Dabei kann jede der vier Komponenten 16 diskrete Werte annehmen. In jedem Tabellenspeicherplatz sollen Wertekombinationen [C2,M2, Y2,K2] gespeichert werden, die im folgenden als "Funktionswerte" bezeichnet werden. Zunächst werden für alle Adressen nach den Gleichungen (5) die zugeordneten Funktionswerte [C2,M2,Y2] in den Tabellenspeicher geschrieben. Dabei spielt die Adreßkomponente K1 keine Rolle, d.h. sie kann jeden der möglichen 16 Werte annehmen. Alle Adressen mit einer bestimmten Kombination von Adreßkomponenten [C1,M1,Y1] erhalten die nach den Gleichungen (5) zugeordneten Funktionswerte [C2,M2,Y2]. Anschließend wird in alle Adressen nach der Gleichung (1) der zugeordnete Funktionswert K2 geschrieben. Dabei spielen die Adreßkomponenten [C1,M1,Y1] keine Rolle, d.h. sie können jede der möglichen 16 × 16 × 16 Kombinationen annehmen. Alle Adressen mit einer bestimmten Adreßkomponente K1 erhalten den nach der Gleichung (1) zugeordneten Funktionswert K2. Dabei werden die zuvor eingeschriebenen Funktionswerte [C2,M2,Y2] nicht verändert.

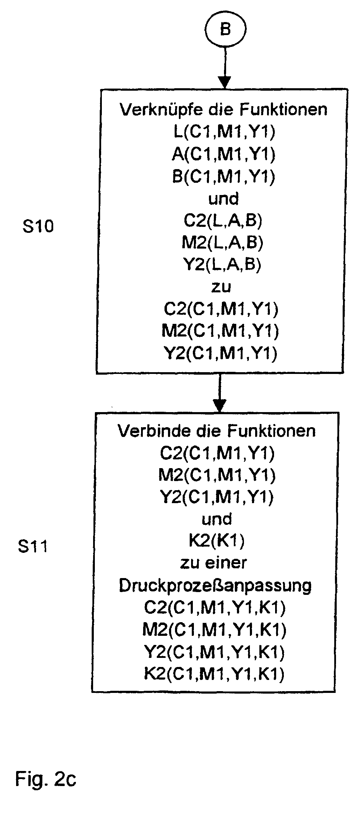

Die nach dem bisher beschriebenen erfindungsgemäßen Verfahren gewonnene vierdimensionale Farbraumtransformation erfüllt die wesentlichen Anforderungen an eine Druckprozeßanpassung mit Erhaltung des Schwarzaufbaus aus dem ersten Druckprozeß. Rein schwarze bzw. graue Farben bleiben auch im zweiten Druckprozeß rein schwarz bzw. grau, und die visuell empfundenen Helligkeiten stimmen für solche Farben überein. Außerdem haben reine Farben ohne Schwarzanteil in beiden Druckprozessen die gleichen visuell empfundenen Farben und Helligkeiten. Es können jedoch auch noch Restfehler vorhanden sein, deren Größe davon abhängt, wie stark sich der erste und der zweite Druckprozeß unterscheiden. Bei nicht reinen Farben, d.h. Farben mit einem Schwarzanteil. stimmen die LAB-Farbwerte in beiden Druckprozessen nicht ganz überein. Auch bei rein schwarzen bzw. grauen Farben können die LAB-Farbwerte eventuell etwas unterschiedlich sein, wenn die schwarze Druckfarbe des zweiten Druckprozesses gegenüber der des ersten Druckprozesses einen leichten Farbstich hat oder umgekehrt. Um solche Restfehler zu verringern, kann die im Schritt S11 (Fig. 2c) gewonnene Druckprozeßanpassung von Farbwerten [C1,M1,Y1,K1] des ersten Druckprozesses zu Farbwerten [C2,M2,Y2,K2] des zweiten Druckprozesses weiter optimiert werden.

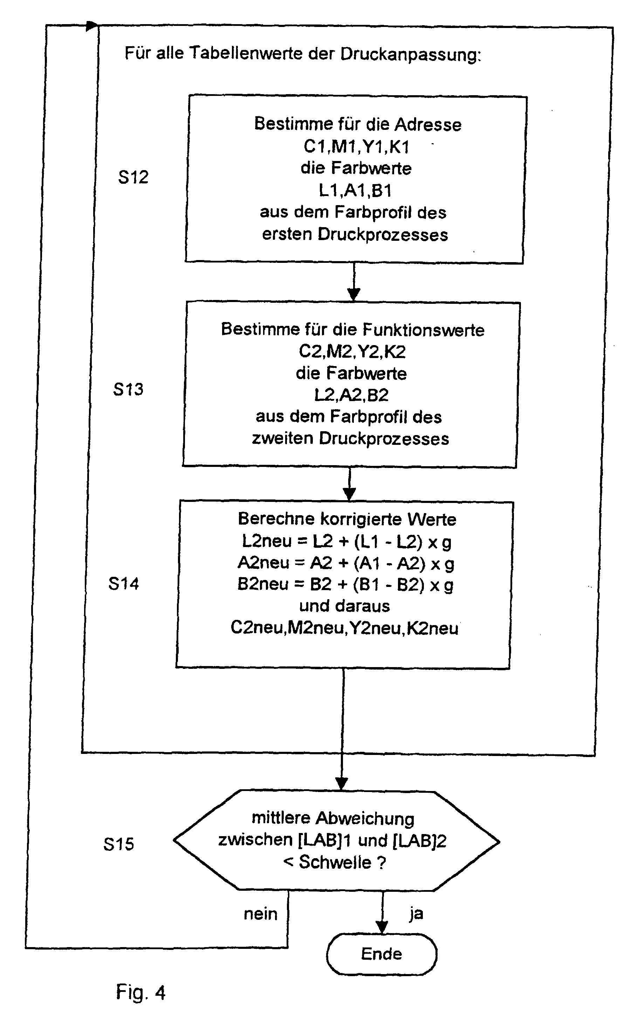

Fig. 4 zeigt die weitere Optimierung der Druckprozeßanpassung als Ablaufdiagramm. Für alle Tabellenwerte der Druckanpassung werden die Schritte S12, S13 und S14 nacheinander ausgeführt. Im Schritt S12 werden für eine Adresse [C1,M1,Y1,K1] die Farbwerte [L1,A1,B1] aus dem Farbprofil des ersten Druckprozesses bestimmt. Im Schritt S13 werden für die der Adresse zugeordneten Funktionswerte [C2,M2,Y2,K2] die Farbwerte [L2,A2,B2] aus dem Farbprofil des zweiten Druckprozesses bestimmt. Für eine optimale Druckanpassung sollten diese LAB-Farbwerte des ersten und zweiten Druckprozesses für alle Farben übereinstimmen. Aus den verbliebenen Differenzen werden im Schritt S14 korrigierte Farbwerte [L2neu,A2neu,B2neu] berechnet.

$$L2neu = L2 + (L1 - L2) \times g$$

$$A2neu = A2 + (A1 - A2) \times g$$

$$B2neu = B2 + (B1 - B2) \times g \qquad (7)$$

Dabei werden die Differenzen mit einem Gewichtsfaktor g < 1 multipliziert und so zu den Farbwerten [L2,A2,B2] addiert, daß die neuen Farbwerte [L2neu, A2neu, B2neu] näher an den entsprechenden Farbwerten [L1,A1,B1] des ersten Druckprozesses liegen. Aus den neuen LAB-Farbwerten [L2neu,A2neu,B2neu] werden über das Farbprofil des zweiten Druckprozesses entsprechend korrigierte neue Funktionswerte [C2neu, M2neu,Y2neu,K2neu] bestimmt und anstelle der bisherigen Funktionswerte [C2,M2,Y2,K2] in die Druckanpassungstabelle eingesetzt. Nachdem diese Korrektur für alle Tabellenwerte durchgeführt wurde, wird im Schritt S15 geprüft, ob die mittlere Abweichung zwischen den Farbwerten [L1,A1,B1] des ersten Druckprozesses und den zugeordneten aus den korrigierten Funktionswerten bestimmten Farbwerten [L2,A2,B2] eine Schwelle unterschreitet. Wenn die Schwelle noch nicht unterschritten wird, d.h. wenn die Abweichungen noch zu groß sind, wird der Korrekturzyklus noch einmal für alle Tabellenwerte durchgeführt, andernfalls ist die Optimierung beendet. Als Variante des Korrekturverfahrens kann man aus den Adressen [C1,M1,Y1,K1] und den Funktionswerten [C2,M2,Y2,K2] auch die geräteunabhängigen Farbwerte [X1,Y1,Z1] und die Farbwerte [X2,Y2,Z2] über die Farbprofile bestimmen und aus ihren Differenzen korrigierte Farbwerte [X2neu,Y2neu, Z2neu] errechnen, die dann wiederum in korrigierte Funktionswerte [C2neu,M2neu,Y2neu, K2neu] umgesetzt werden. Eine weitere Variante ist, den Gewichtsfaktor g bei jeder Iteration des Korrekturzyklus zu verringern, um sich langsam dem Optimum anzunähern.

## Patentansprüche

1.  Verfahren zur Erzeugung einer Farbraumtransformation, mit der die Farbwerte eines ersten Druckprozesses in die Farbwerte eines zweiten Druckprozesses umgesetzt werden, so daß der Schwarzaufbau des ersten Druckprozesses im wesentlichen in den zweiten Druckprozess übernommen wird und der visuelle Eindruck der gedruckten Farben in beiden Druckprozessen im wesentlichen gleich ist, wobei die Farbwiedergabeeigenschaften des ersten Druckprozesses mittels eines ersten Farbprofils charakterisiert sind, das eine Zuordnung zwischen den geräteabhängigen Farbwerten [C1,M1, Y1,K1] des ersten Druckprozesses und den Farbwerten [L,A,B] eines geräteunabhängigen Farbraums angibt, und die Farbwiedergabeeigenschaften des zweiten Druckprozesses mittels eines zweiten Farbprofils charakterisiert sind, das eine Zuordnung zwischen den geräteabhängigen Farbwerten [C2,M2,Y2,K2] des zweiten Druckprozesses und den Farbwerten [L,A,B] eines geräteunabhängigen Farbraums angibt,
**dadurch gekennzeichnet, daß**

> a) aus dem ersten Farbprofil ein Helligkeitsverlauf L(K1) bestimmt wird,
> b) aus dem zweiten Farbprofil ein Helligkeitsverlauf L(K2) bestimmt wird,
> c) aus dem Helligkeitsverlauf L(K2) ein invertierter Helligkeitsverlauf K2(L) berechnet wird,
> d) der invertierte Helligkeitsverlauf K2(L) und der Helligkeitsverlauf L(K1) zu einer Transformationsfunktion K2(K1) verknüpft werden,
> e) aus dem ersten Farbprofil Transformationsfunktionen L(C1,M1,Y1), A(C1,M1,Y1), B (C1,M1,Y1) bestimmt werden,
> f) aus dem zweiten Farbprofil Transformationsfunktionen L(C2,M2,Y2), A(C2,M2,Y2), B (C2,M2,Y2) bestimmt werden,
> g) aus den Transformationsfunktionen L (C2,M2,Y2), A(C2,M2,Y2), B(C2,M2,Y2) invertierte Transformationsfunktionen C2(L,A,B), M2(L,A,B), Y2(L,A,B) berechnet werden,
> h) die invertierten Transformationsfunktionen C2(L,A,B), M2(L,A,B), Y2(L,A,B) und die Transformationsfunktionen L(C1,M1,Y1), A (C1,M1,Y1), B(C1,M1,Y1) zu Transformationsfunktionen C2(C1,M1,Y1), M2(C1,M1,Y1), Y2 (C1,M1,Y1) verknüpft werden, und
> i) die Transformationsfunktionen C2(C1,M1, Y1), M2(C1,M1,Y1), Y2(C1,M1,Y1) mit der Transformationsfunktion K2(K1) zu einer Farbraumtransformation zwischen Farbwerten [C1,M1,Y1,K1] des ersten Druckprozesses und Farbwerten [C2,M2,Y2,K2] des zweiten Druckprozesses verbunden werden.

2.  Verfahren nach Anspruch 1, **dadurch gekennzeichnet, daß** der Helligkeitsverlauf L(K2) vor dem Invertieren so korrigiert wird, daß er monoton ist.

3.  Verfahren nach Anspruch 1, **dadurch gekennzeichnet, daß** die Transformationsfunktionen L (C2,M2,Y2), A(C2,M2,Y2), B(C2,M2,Y2) vor dem Invertieren so korrigiert werden, daß sie monoton sind.

4. Verfahren nach Anspruch 1, **dadurch gekennzeichnet, daß** die Farbraumtransformation korrigiert wird, indem

   a) aus dem ersten Farbprofil für die Farbwerte [C1,M1,Y1,K1] des ersten Druckprozesses die geräteunabhängigen Farbwerte [L1,A1,B1] bestimmt werden,

   b) aus dem zweiten Farbprofil für die mit der Farbraumtransformation zugeordneten Farbwerte [C2,M2,Y2,K2] des zweiten Druckprozesses die geräteunabhängigen Farbwerte [L2,A2,B2] bestimmt werden,

   c) aus der Abweichung zwischen den Farbwerten [L1,A1,B1] und [L2,A2,B2] korrigierte Farbwerte [L2neu,A2neu,B2neu] berechnet werden,

   d) aus den korrigierten Farbwerten [L2neu, A2neu,B2neu] korrigierte geräteabhängige Farbwerte [C2neu,M2neu,Y2neu,K2neu] ermittelt werden, und

   e) in der Farbraumtransformation die zugeordneten Farbwerte [C2,M2,Y2,K2] des zweiten Druckprozesses durch die korrigierten Farbwerte [C2neu,M2neu,Y2neu,K2neu] ersetzt werden.

5. Verfahren nach Anspruch 4, **dadurch gekennzeichnet, daß** die Korrektur mehrfach durchgeführt wird, bis die mittlere Abweichung zwischen den Farbwerten [L1,A1,B1] und [L2,A2,B2] einen Schwellwert unterschreitet.

6. Verfahren nach Anspruch 4, **dadurch gekennzeichnet, daß** die Korrektur aus der Abweichung zwischen den geräteunabhängigen Farbwerten [X1,Y1,Z1] und [X2,Y2,Z2] berechnet wird.

**Claims**

1. Method for producing a colour-space transformation by which the tristimulus values of a first printing process are converted into the tristimulus values of a second printing process so that the black content of the first printing process is substantially carried over into the second printing process and the visual impression of the printed colours is substantially the same in both printing processes, wherein the colour-reproduction properties of the first printing process are **characterized by** means of a first colour profile which specifies a relationship between the device-dependent tristimulus values [C1,M1,Y1,K1] of the first printing process and the tristimulus values [L,A,B] of a device-independent colour space, and the colour-reproduction properties of the second printing process are **characterized by** means of a second colour profile which specifies a relationship between the device-dependent tristimulus values [C2,M2,Y2,K2] of the second printing process and the tristimulus values [L,A,B] of a device-independent colour space, **characterized in that**

   a) a brightness curve L(K1) is determined from the first colour profile,

   b) a brightness curve L(K2) is determined from the second colour profile,

   c) an inverted brightness curve K2(L) is computed from the brightness curve L(K2),

   d) the inverted brightness curve K2(L) and the brightness curve L(K1) are combined as a transformation function K2(K1),

   e) transformation functions L(C1,M1,Y1), A (C1,M1,Y1), B(C1,M1,Y1) are determined from the first colour profile,

   f) transformation functions L(C2,M2,Y2), A (C2,M2,Y2), B(C2,M2,Y2) are determined from the second colour profile,

   g) inverted transformation functions C2(L,A,B), M2(L,A,B), Y2(L,A,B) are computed from the transformation functions L(C2,M2,Y2), A(C2, M2,Y2), B(C2,M2,Y2),

   h) the inverted transformation functions C2(L, A,B), M2(L,A,B), Y2(L,A,B) and the transformation functions L(C1,M1,Y1), A(C1,M1,Y1), B (C1,M1,Y1) are combined as transformation functions C2(C1,M1,Y1), M2(C1,M1,Y1), Y2 (C1,M1,Y1), and

   i) the transformation functions C2(C1,M1,Y1), M2(C1,M1,Y1), Y2(C1,M1,Y1) are linked with the transformation function K2(K1) to make a colour-space transformation between tristimulus values [C1,M1,Y1,K1] of the first printing process and tristimulus values [C2,M2,Y2,K2] of the second printing process.

2. Method according to Claim 1, **characterized in that** the brightness curve L(K2) is corrected before inversion so that it is monotone.

3. Method according to Claim 1, **characterized in that** the transformation functions L(C2,M2,Y2), A (C2,M2,Y2), B(C2,M2,Y2) are corrected before inversion so that they are monotone.

4. Method according to Claim 1, **characterized in that** the colour-space transformation is corrected by

   a) determining the device-independent tristimulus values [L1,A1,B1] from the first colour profile for the tristimulus values [C1,M1,Y1,K1] of the first printing process,

b) determining the device-independent tristimulus values [L2,A2,B2] from the second colour profile for the tristimulus values [C2,M2,Y2,K2] of the second printing process related with the colour-space transformation,

c) computing corrected tristimulus values [L2new,A2new,B2new] from the difference between the tristimulus values [L1,A1,B1] and [L2,A2,B2],

d) determining corrected device-dependent tristimulus values [C2new,M2new,Y2new, K2new] from the corrected tristimulus values [L2new,A2new,B2new], and

e) substituting the corrected tristimulus values [C2new,M2new,Y2new,K2new] for the related tristimulus values [C2,M2,Y2,K2] of the second printing process, in the colour-space transformation.

5. Method according to Claim 4, **characterized in that** the correction is carried out repeatedly until the mean difference between the tristimulus values [L1,A1,B1] and [L2,A2,B2] falls below a threshold value.

6. Method according to Claim 4, **characterized in that** the correction is computed from the difference between the device-independent tristimulus values [X1,Y1,Z1] and [X2,Y2,Z2].

## Revendications

1. Procédé pour produire une transformation de l'espace chromatique avec lequel la valeur chromatique d'une première opération d'impression est transformée en la valeur chromatique d'une deuxième opération d'impression, de sorte que la structure du noir de la première opération d'impression est pour l'essentiel reprise dans la deuxième opération d'impression et l'impression visuelle des couleurs imprimées dans les deux opérations d'impression est pratiquement la même, les propriétés de restitution chromatique de la première opération d'impression étant **caractérisées par** un premier profil chromatique qui indique une association entre les valeurs chromatiques [C1, M1, Y1, K1] de la première opération d'impression d'un espace chromatique dépendant des appareils et les valeurs chromatiques [L, A, B] d'un espace chromatique indépendant des appareils, et les propriétés de restitution chromatique de la deuxième opération d'impression étant caractérisées au moyen d'un deuxième profil chromatique qui indique une association entre les valeurs chromatiques [C2, M2, Y2, K2] de la deuxième opération d'impression dépendant des appareils et les valeurs chromatiques [L, A, B] d'un espace chromatique indépendant des appareils,

**caractérisé en ce que**

a) un gradient de luminosité L(K1) est déterminé à partir du premier profil chromatique,

b) un gradient de luminosité L(K2) est déterminé à partir du deuxième profil chromatique,

c) un gradient inverse de luminosité K2(L) est calculé à partir du gradient de luminosité L(K2),

d) le gradient inverse de luminosité K2(L) et le gradient de luminosité L(K1) sont liés pour donner une fonction de transformation K2(K1),

e) des fonctions de transformation L(C1, M1, Y1), A(C1, M1, Y1), B (C1, M1, Y1) sont déterminées à partir d'un premier profil chromatique,

f) des fonctions de transformation L(C2, M2, Y2), A(C2, M2, Y2), B (C2, M2, Y2) sont déterminées à partir d'un deuxième profil chromatique,

g) des fonctions de transformation inverses C2 (L, A, B), M2(L, A, B), Y2(L, A, B) sont calculées à partir des fonctions de transformation L(C2, M2, Y2), A(C2, M2, Y2), B (C2, M2, Y2),

h) les fonctions de transformation inverses C2 (L, A, B), M2(L, A, B), Y2(L, A, B) et les fonctions de transformation L(C1, M1, Y1), A(C1, M1, Y1), B (C1, M1, Y1) sont liées pour donner des fonctions de transformation C2(C1, M1, Y1), M2(C1, M1, Y1), Y2(C1, M1, Y1) et

i) les fonctions de transformation C2(C1, M1, Y1), M2(C1, M1, Y1), Y2(C1, M1, Y1) sont liées avec la fonction de transformation K2(K1) pour donner une transformation d'espace chromatique entre les valeurs chromatiques [C1, M1, Y1, K1] de la première opération d'impression et les valeurs chromatiques [C2, M2, Y2, K2] de la deuxième opération d'impression.

2. Procédé selon la revendication 1, **caractérisé en ce que** le gradient de luminosité L(K2) est corrigé avant l'inversion de sorte qu'il est monotone.

3. Procédé selon la revendication 1, **caractérisé en ce que** les fonctions de transformation L(C2, M2, Y2,), A (C2, M2, Y2,) B(C2, M2, Y2,) sont corrigées avant l'inversion de sorte qu'elles sont monotones.

4. Procédé selon la revendication 1, **caractérisé en ce que** la transformation d'espace chromatique est corrigée de la façon suivante :

a) les valeurs chromatiques [L1, A1, B1] indépendantes des appareils sont déterminées à partir du premier profil chromatique pour les valeurs chromatiques [C1, M1, Y1, K1] de la première opération d'impression,

b) les valeurs chromatiques [L2, A2, B2] indépendantes des appareils sont déterminées à partir du deuxième profil chromatique pour les valeurs chromatiques [C2, M2, Y2, K2] de la deuxième opération d'impression qui sont associées à la transformation d'espace chromatique,

c) des valeurs chromatiques corrigées [L2neu, A2neu, B2neu] sont calculées à partir de l'écart entre les valeurs chromatiques [L1, A1, B1] et [L2, A2, B2],

d) des valeurs chromatiques corrigées [C2neu, M2neu, Y2neu, K2neu] dépendantes des appareils sont établies à partir des valeurs chromatiques corrigées [L2neu, A2neu, B2neu] et

e) dans la transformation d'espace chromatique les valeurs chromatiques [C2, M2, Y2, K2] associées de la deuxième opération d'impression sont remplacées par les valeurs chromatiques corrigées [C2neu, M2neu, Y2neu, K2neu].

5.  Procédé selon la revendication 4,
    **caractérisé en ce que**
    la correction est exécutée plusieurs fois jusqu'à ce que l'écart moyen entre les valeurs chromatiques [L1, A1, B1] et [L2, A2, B2] soit inférieur à un seuil.

6.  Procédé selon la revendication 4,
    **caractérisé en ce que**
    la correction est calculée à partir de l'écart entre les valeurs chromatiques [X1, Y1, Z1] et [X2, Y2, Z2] indépendantes des appareils.

EP 1 222 810 B1

C1 ⟶
M1 ⟶
Y1 ⟶
K1 ⟶

**TRANSFORMATION**

[C1,M1,Y1,K1] => [L,A,B]

⟶ L
⟶ A
⟶ B

**TRANSFORMATION**

[L,A,B] => [C2,M2,Y2,K2]

⟶ C2
⟶ M2
⟶ Y2
⟶ K2

Fig. 1a

C1 ⟶
M1 ⟶
Y1 ⟶
K1 ⟶

**TRANSFORMATION**

[C1,M1,Y1,K1] => [C2,M2,Y2,K2]

⟶ C2
⟶ M2
⟶ Y2
⟶ K2

Fig. 1b

3

S1 | Bestimme Helligkeitsverlauf
L(K1)
aus dem Farbprofil des
ersten Druckprozesses

S2 | Bestimme Helligkeitsverlauf
L(K2)
aus dem Farbprofil des
zweiten Druckprozesses

S3 | Mache L(K2) monoton

S4 | Invertiere
L(K2) zu K2(L)

S5 | Verknüpfe
K2(L) und L(K1)
zu
K2(K1)

S6 | Bestimme für K1=0 die
Transformationsfunktionen
L(C1,M1,Y1)
A(C1,M1,Y1)
B(C1,M1,Y1)
aus dem Farbprofil des
ersten Druckprozesses

A

Fig. 2a

Fig. 2b

B

S10

Verknüpfe die Funktionen
L(C1,M1,Y1)
A(C1,M1,Y1)
B(C1,M1,Y1)
und
C2(L,A,B)
M2(L,A,B)
Y2(L,A,B)
zu
C2(C1,M1,Y1)
M2(C1,M1,Y1)
Y2(C1,M1,Y1)

S11

Verbinde die Funktionen
C2(C1,M1,Y1)
M2(C1,M1,Y1)
Y2(C1,M1,Y1)
und
K2(K1)
zu einer
Druckprozeßanpassung
C2(C1,M1,Y1,K1)
M2(C1,M1,Y1,K1)
Y2(C1,M1,Y1,K1)
K2(C1,M1,Y1,K1)

Fig. 2c

Fig. 3

Für alle Tabellenwerte der Druckanpassung:

S12

Bestimme für die Adresse
C1,M1,Y1,K1
die Farbwerte
L1,A1,B1
aus dem Farbprofil des
ersten Druckprozesses

S13

Bestimme für die Funktionswerte
C2,M2,Y2,K2
die Farbwerte
L2,A2,B2
aus dem Farbprofil des
zweiten Druckprozesses

S14

Berechne korrigierte Werte
$L2neu = L2 + (L1 - L2) \times g$
$A2neu = A2 + (A1 - A2) \times g$
$B2neu = B2 + (B1 - B2) \times g$
und daraus
C2neu,M2neu,Y2neu,K2neu

S15

mittlere Abweichung
zwischen [LAB]1 und [LAB]2
< Schwelle ?

nein

ja

Ende

Fig. 4